Europäisches Patentamt

(19) European Patent Office

Office européen des brevets

(11) Publication number: **0 005 306**
**B1**

(12) **EUROPEAN PATENT SPECIFICATION**

(45) Date of publication of patent specification: **15.07.81**

(51) Int. Cl.³: **C 03 B 23/023**

(21) Application number: **79300017.5**

(22) Date of filing: **05.01.79**

(54) **Apparatus and method for bending glass.**

(30) Priority: **01.05.78 US 901533**

(43) Date of publication of application:
**14.11.79 Bulletin 79/23**

(45) Publication of the grant of the European patent:
**15.07.81 Bulletin 81/28**

(84) Designated Contracting States:
**BE CH DE FR GB IT LU NL SE**

(56) References cited:
**US - A - 3 607 187**
**US - A - 3 682 613**
**US - A - 3 778 244**
**US - A - 3 846 104**

(73) Proprietor: **McMaster, Harold A.**
**420 Water Street**
**Woodville Ohio (US)**

(73) Proprietor: **Nitschke, John Stephen**
**324 East Second**
**Perrysburg Ohio (US)**

(73) Proprietor: **Nitschke, Dean Michael**
**512 W. Broadway**
**Maumee Ohio (US)**

(72) Inventor: **McMaster, Harold A.**
**420 Water Street**
**Woodville Ohio (US)**
Inventor: **Nitschke, John Stephen**
**324 East Second**
**Perrysburg Ohio (US)**
Inventor: **Nitschke, Dean Michael**
**512 W. Broadway**
**Maumee Ohio (US)**

(74) Representative: **Wisher, Michael Frederick et al,**
**Urquhart-Dykes & Lord 47 Marylebone Lane**
**London W1M 6DL (GB)**

Courier Press, Leamington Spa, England.

## Apparatus and method for bending glass

### Technical field

This invention relates to apparatus and a method for bending heated sheets of glass in a manner that is particularly adaptable for use prior to quenching of the bent sheet of glass so as to thereby provide tempering of the glass in order to increase its mechanical strength.

### Background art

Bent and tempered glass is used extensively for vehicle side and rear windows to provide good resistance to breakage as well as an aesthetically appealing shape that complements the design of the vehicle. In order to perform the bending and tempering, sheet glass must be heated to its deformation point of about 1200° to 1300°F (650°C to 700°C) and then bent to the required shape before being rapidly cooled by an air spray in order to temper the glass. Tempering greatly increases the mechanical strength of the glass and its resistance to breakage as well as causing the glass to break into small relatively dull pieces when broken instead of into large sharp slivers as is the case with untempered glass.

One manner in which glass is bent and tempered is with press benders having shaped surfaces between which heated glass is clamped to shape it prior to being air cooled by a quench unit to provide tempering. United States Patents 3,454,389; 3,476,542; 3,448,178; 3,600,150; and 3,951,634 disclose press bending and tempering apparatus for sheet glass.

Sheet glass is also bent and tempered by heating of planar glass sheets while supported on bending molds including movable sections. Prior to softening of the glass during heating, the sections of the mold are oriented to accommodate for the glass sheet planarity. Upon softening of the glass sheet as it is heated, the mold sections move relative to each other under the force of gravity acting on the sheet and the mold sections in order to provide bending of the sheet prior to rapid cooling thereof which provides its tempering. Thin glass, i.e. on the order of 1/8″ (3 mm), cannot be bent by this apparatus since it does not become hot enough to temper until the glass becomes so soft that it overbends. United States Patents 3,269,822; 3,278,287; 3,307,930; and 3,365,285 disclose this type of bending and tempering apparatus.

Heating of glass sheets prior to bending and tempering thereof has also been performed on fluid support beds as the glass is conveyed through a furnace. Normally the support bed is inclined slightly with respect to the horizontal so that gravity engages an edge of the glass with a movable frame that provides the impetus for glass movement along the bed. There is no contact between the bed and the oppositely facing surfaces of the glass during the conveyance as the glass is heated. This lack of contact prevents marring and scratching of the soft surfaces of the glass as the glass reaches its deformation temperature. United States Patents 3,497,340; 3,607,187; and 3,607,200 disclose glass bending and tempering apparatus of this type with a fluid support bed.

Vacuum forming of heated glass sheets is disclosed by United States Patent 3,778,244 wherein the sheet glass is first heated during conveyance along a roller hearth conveyor. After heating, a lifter with a curved downwardly facing surface has a vacuum applied thereto about the surface to shape the glass. After shaping against the curved surface of the lifter, the vacuum is terminated to drop the glass onto a mold for conveyance to a waiting operator who removes the glass from the mold. Further vacuum forming of the glass to a curved surface of the mold is also disclosed.

Other bending and tempering apparatus for sheet glass is disclosed by United States Patents 2,223,124; 2,348,887; 2,646,647; and 2,085,520.

It is also known to heat sheet glass by conveyance thereof on a roller hearth conveyor that extends through a heating chamber of a furnace. The glass is supported on elongated rolls or rollers of the conveyor in a horizontally extending orientation. Opposite ends of the rollers are frictionally driven by continuous drive loops in the form of belts or chains in order to provide the glass movement. See United States Patents 3,806,312; 3,934,970; 3,947,242; and 3,994,711.

### Disclosure of the invention

An object of the present invention is to provide improved apparatus and an improved method for bending heated sheets of glass transported generally horizontally on a conveyor. The glass bending apparatus and method is particularly adaptable for use in bending heated sheets of glass prior to quenching of the glass to provide tempering thereof but can also be utilized to bend glass which is then annealed.

In carrying out the above object and other objects of the invention, the apparatus is located within a heating chamber of a furnace that heats the glass and includes a holder located above the conveyor in a spaced relationship such that a heated sheet of glass can be transported below the holder. Gas such as air is then blown upwardly through restricted openings below the conveyor into impingement with the heated sheet of glass such that the sheet is moved upwardly into engagement with the holder. A mold preferably in the form of a ring is then moved under the holder to receive the sheet of glass for bending.

Embodiments of the holder disclosed include a curved surface, a generally planar surface, a curved ring, and a generally planar ring. A vacuum may be drawn with the holder embodiments having the surfaces so as to assist the upwardly blown gas in lifting the sheet of glass off the conveyor. Vertical movement of the holder downwardly prior to the lifting facilitates the lifting of the glass into engagement with the holder and subsequent upward movement of the holder then allows the mold ring to move under the holder to receive the sheet of glass for bending.

All of the holder embodiments disclosed are capable of bending the lifted sheet of glass by dropping it onto the mold ring for sag bending under the influence of gravity. The holder embodiments including the curved surface and the curved ring are also operable to bend the heated sheet of glass between the holder and the mold ring. With the sheet of glass lifted on the holder, relative vertical movement between the holder and the mold ring provides the bending of the glass therebetween. The relative vertical movement between the holder and the mold ring is preferably provided by the same vertical holder movement that is used in the initial glass pickup; but, it is also possible to move the mold upwardly to provide this bending. Upon the initial pickup of the glass by the holders having the curved surface and the curved ring, the sheet of glass may be partially or fully formed to the curved shape of the holder by the upwardly blown gas. A first portion of the sheet of glass is engaged with the holder when the sheet is only partially formed and at least one second portion thereof is then prevented from drooping downwardly by the upwardly blown gas and may also be prevented from drooping downwardly by the vacuum which is applied to the curved surface embodiment of the holder. Subsequent sag bending of the sheet of glass on the mold ring allows forming thereof to the required curvature which may be the same as or greater than the curvature of the curved holder embodiments.

A plenum or other suitable blowing unit is located below rolls of the conveyors to blow the gas upwardly against the heated sheet of glass that is lifted upwardly against the holder. Pressurized gas such as heated air in the furnace heating chamber is supplied to the plenum so that the air is forced out of restricted jet openings upwardly against the glass sheet. The upwardly blown gas cooperates with the holder embodiments having the surfaces at which a vacuum is drawn in order to provide the lifing of the sheet of glass off the conveyor into engagement with the holder. The vacuum drawn at the holder surface is at a controlled degree which can be decreased after pickup to prevent deformation of the lifted sheet of glass at spaced openings in the surface through which the vacuum is drawn. Gas under slight pressure can also be supplied to the holder to blow the lifted sheet of glass downwardly away from the holder onto the mold ring.

The objects, features, and advantages of the present invention are readily apparent from the following detailed description of the preferred modes thereof when taken in connection with the accompanying drawings.

### Brief description of drawings

FIGURE 1 is a schematic top plan view of a glass tempering system that includes bending apparatus constructed according to the present invention;

FIGURE 2 is an elevation view taken along line 2—2 of FIGURE 1 and shows the glass bending apparatus;

FIGURE 3 is a view similar to FIGURE 2 but shows the apparatus after a heated sheet of glass has been lifted upwardly off a conveyor by a vacuum holder into engagement with a lower curved surface thereof;

FIGURE 4 is a view similar to FIGURE 3 but at a subsequent stage of operation according to one mode of operation wherein the heated sheet of glass is bent between the holder and a mold of the apparatus;

FIGURE 5 is another view similar to FIGURE 3 which shows the operation according to another mode of operation wherein the sheet of glass is dropped downwardly for sag bending under gravity on the mold;

FIGURE 6 is a view similar to FIGURE 5 which shows the apparatus after the gravity sag bending on the mold is completed;

FIGURE 7 is a view similar to FIGURE 6 of another embodiment of the vacuum holder which has a generally planar lower surface;

FIGURE 8 is a view similar to FIGURE 6 of another embodiment of the holder which includes a generally planar ring; and

FIGURE 9 is a view similar to FIGURE 6 of another embodiment of the holder which includes a curved ring.

### Best modes for carrying out the invention

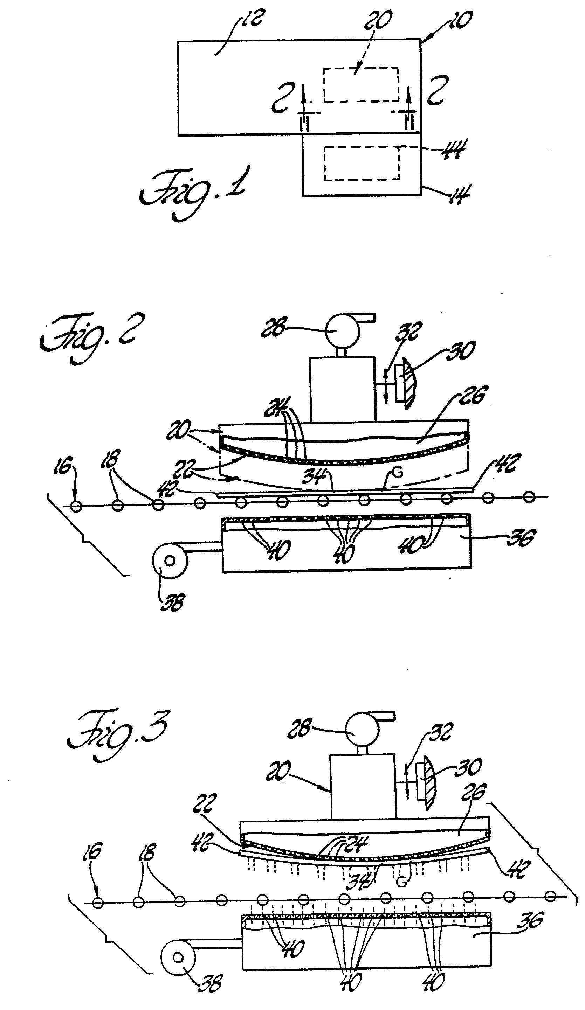

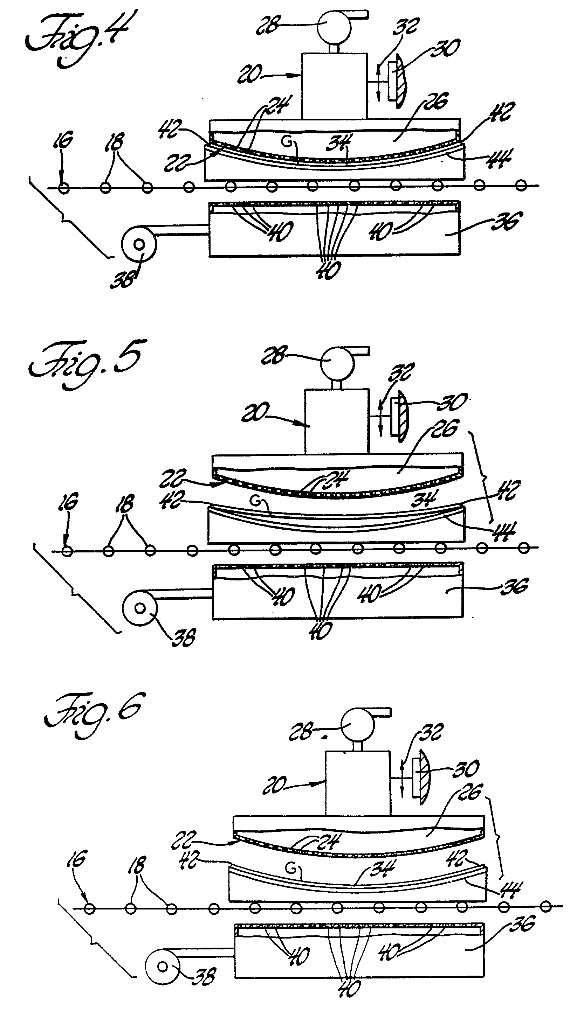

Referring to FIGURE 1 of the drawings, a glass bending and tempering system indicated generally by 10 incorporates apparatus constructed according to the present invention and includes a furnace 12 having a heating chamber for heating sheets of glass and also includes a quench station 14 for rapidly cooling the glass to provide tempering thereof after a bending operation has first been performed in a manner which is hereinafter described. Furnace 12 includes a roller hearth conveyor shown in FIGURE 2 and indicated by reference numeral 16. Rollers or rolls 18 of the coneyor transport sheets of glass G in a horizontal orientation for heating within the heating chamber of the furnace.

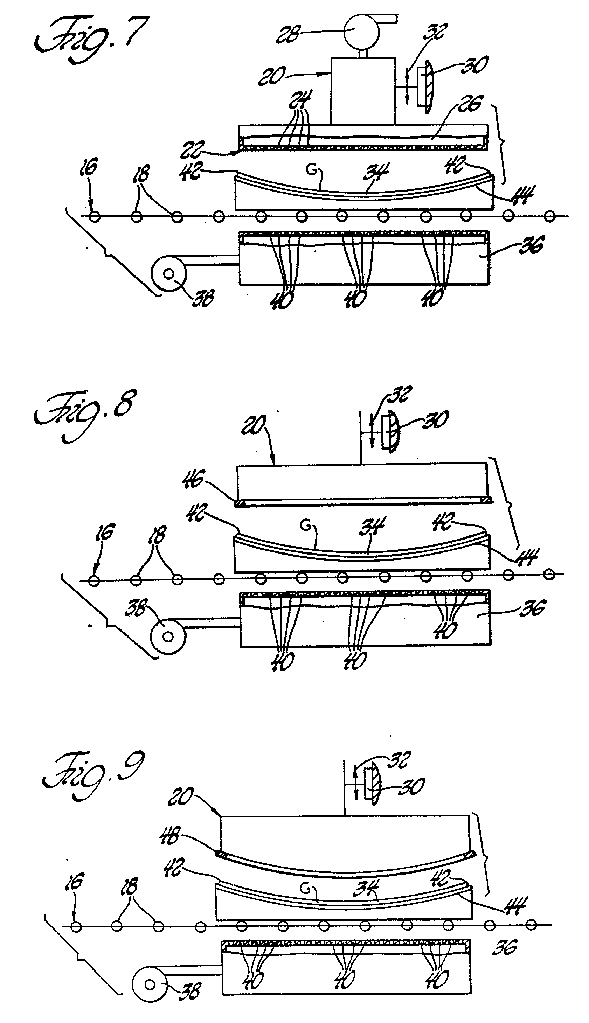

Apparatus constructed according to this invention is shown in FIGURE 2 as including a holder 20 which has a lower curved surface 22 of a downwardly convex shape. Openings 24 in surface 22 communicate with a plenum 26 of the holder in which a vacuum may be drawn by a vacuum drawing or blower unit 28. An actuator 30 mounts the holder 20 for vertical movement upwardly and downwardly as shown by arrows 32. Downward movement of the holder 20 to the phantom line indicated position of FIGURE 2 positions the holder surface 22 in proximity to the heated sheet of glass G which is transported under the holder. The central portion 34 of the glass sheet is located closest to the holder surface 22. A fixed plenum 36 mounted within the surface heating chamber below the conveyor 16 is supplied positive gage pressure gas, such as heated air in the heating chamber, by a blower 38. Restricted jet openings 40 in the upper side of the plenum allow the pressurized gas to escape and to be blown upwardly against the sheet of glass. The upwardly blown air lifts the glass into engagement with the lower surface 22 of the holder. As seen in FIGURE 3, holder 20 is subsequently moved upwardly and the upwardly blown gas prevents the glass sheet ends 42 from drooping downwardly relative to the central portion 34. Preferably, the upwardly blown glass bends the ends 42 upwardly toward the curved shape of the lower holder surface 22. The vacuum which may be drawn within the holder surface openings 24 assists the upwardly blown gas in lifting the glass sheet and preventing drooping of its ends and also assists in bending the ends upwardly.

A curved mold 44 is then moved under the holder 20 as shown in FIGURE 4 and the holder is moved downwardly in accordance with one mode of operation toward the mold so that the sheet of glass G is bent between the mold and the holder surface 22. Ends 42 of the sheet glass are bent farther in an upward direction relative to the central glass portion 34 by the consequent forming which takes place. It should be noted that the mold 44 preferably takes the form of a ring having an open center and a shape that corresponds to the periphery of the sheet of glass. A helical spring may be wrapped around the mold ring 44 in order to reduce the surface contact with the heater sheet of glass to prevent cracking of the glass. After the bending, the vacuum holder 20 is moved upwardly and the mold ring 44 is moved to the quench station 14 in any suitable manner so that cooling of the sheet of glass in its bent shape provides tempering thereof which increases the mechanical strength of the glass.

Another mode of operation of the apparatus is shown in FIGURE 5 wherein the partially bent sheet of glass G is dropped downwardly by termination of the gas blown upwardly by the plenum 36 and termination of any vacuum drawn at the surface openings 24. Gravity then causes the sheet of glass G to sag to the shape of the mold ring 44. Ends 42 of the sheet of glass are thus effectively bent upwardly by the downward sagging of the central portion 34. Subsequently, the mold ring 44 is moved to the quench station 14 shown in FIGURE 1 for tempering.

It should be noted that the blower unit 28 may be operable to draw the vacuum at a controlled rate that can be decreased after pickup to prevent deformation of the lifted sheet of glass at the openings 24 in the holder surface 22. Blower unit 28 can also supply positive gage pressure air to the holder plenum 26 in order to blow the sheet of glass G downwardly away from the holder surface 22.

Another embodiment of the apparatus is shown in FIGURE 7 and the components thereof are the same as those of the previously described embodiments, except as will be noted, such that like reference numerals are applied thereto and much of the previous description is applicable. However, the lower surface 22 of the holder 20 in this embodiment is generally planar so that the full surface of the sheet glass G is engaged with the holder surface upon glass pickup. The holder is movable downwardly to facilitate the pickup by the upwardly blown gas from the lower plenum 36 and, if required, the vacuum assistance, provided by the vacuum which may be drawn at the openings 24 through the planar surface. After upward movement, the glass is dropped onto the mold ring 44 for sag bending under the force of gravity. It is not possible to form the glass between the surface of the holders and the mold due to the planar condition of the holder surface in this embodiment.

A further embodiment of the apparatus is shown in FIGURE 8 and is also identified by the same reference numerals as the previously described embodiments, except as will be noted. The holder 20 of this embodiment includes a ring 42 that has a planar shape and conforms to the periphery of the sheet of glass to be bent. Downward movement of the holder ring 46 prior to positioning of the mold ring 44 thereunder facilitates the proper positioning of the sheet of glass as it is blown upwardly by the plenum air so that its periphery engages the holder ring. Subsequent movement of the mold ring 44 under the holder carrying the lifted sheet of glass and termination of the upwardly blown air then allows the glass to drop downwardly onto the mold ring for sag bending under the influence of gravity. It is not possible to form the sheet of glass between the mold and the holder rings 44 and 46 due to the planar shape of the holder ring.

Another embodiment of the apparatus is shown in FIGURE 9 and identified by the same reference numerals as the previously described embodiments except as will be noted. The holder 20 of this embodiment includes a curved ring 48 against which the upwardly blown gas lifts the sheet of glass G into engagement so as to allow the holder to move upwardly and then permit the mold ring 44 to move under the holder. This embodiment can operate by dropping the sheet of glass upon termination of the upwardly blown air so that the glass sags under the bias of gravity or it can operate by moving the holder downwardly as the air continues to be blown upwardly such that the sheet of Glass G is bent between the mold ring 44 and the holder ring 48.

Those skilled in the art will recognize that various other apparatus and methods for practicing the present invention are possible in addition to the preferred modes which have herein been described in detail and such other apparatus and method are defined by the following claims.

## Claims

1. Apparatus for use in bending heated sheets of glass transported generally horizontally on a conveyor within a heating chamber, the apparatus comprising a holder located above the conveyor in spaced relationship thereto such that a sheet of glass can be transported under the holder by the conveyor and that there are openings below the conveyor for blowing pressurized gas upwardly against the sheet of glass when the glass is below the holder, characterized in that the openings and the pressurized gas are such as to cause the sheet of glass to be lifted upwardly off the conveyor and into engagement with the holder so as to be spaced above the conveyor.

2. Apparatus as in Claim 1 wherein the holder includes a downwardly facing surface that is engaged by the sheet of glass which is lifted upwardly from the conveyor.

3. Apparatus as in Claim 2 wherein the surface of the holder is generally planar.

4. Apparatus as in Claim 2 wherein the surface of the holder is curved.

5. Apparatus as in Claim 3 or 4 further including a vacuum drawing unit for drawing a vacuum at the surface of the holder so as to assist the upwardly blown gas in lifting a sheet of glass upwardly off the conveyor.

6. Apparatus as in Claim 1 wherein the holder comprises a ring that is engaged by the periphery of the sheet of glass that is lifted upwardly from the conveyor.

7. Apparatus as in Claim 6 wherein the ring has a planar shape.

8. Apparatus as in Claim 6 wherein the ring has a curved shape.

9. A method for handling heated sheets of glass transported horizontally on a conveyor, through a glass bending apparatus, the method comprising: conveying a heated sheet of glass below a holder spaced above the conveyor; and characterized by blowing gas upwardly from below the conveyor against the sheet of glass such that the glass is lifted off the conveyor and into engagement with the holder.

10. A method as in Claim 9 wherein a vacuum is drawn at a downwardly facing surface of the holder so as to cooperate with the upwardly blown gas in lifting and supporting the sheet of glass against the holder.

11. A method as in Claim 10 wherein a curved mold is moved under the holder to receive the lifted sheet of glass from the holder for sag bending under gravity.

12. A method as in Claim 9 wherein vertical movement between a curved mold and the holder forms the sheet of glass.

## Patentansprüche

1. Einrichtung zum Biegen oder Formen von aufgeheizten Glasbahnen, die im wesentlichen horizontal auf einem Förderband durch einen Ofen geleitet werden, wobei oberhalb vom Förderband eine in einem den Durchlauf der Glasbahn ermöglichenden Abstand angeordnete Aufnahme und in der von der Glasbahn abgewandten Unterseite des Förderbandes Öffnungen vorgesehen sind, durch die die Glasbahn beim Durchgang von unterhalb der Aufnahme mit Druckgas beaufschlagbar ist, dadurch gekennzeichnet, daß die Öffnungen (40) und das sie durchströmende Druckgas derart zusammenwirken, daß die Glasbahn (G) vom Förderband (16) abgehoben und gegen die Aufnahme (20) gehoben wird.

2. Einrichtung nach Anspruch 1, dadurch gekennzeichnet, daß die Aufnahme (20) eine dem Förderband (16) zugewandte und die vom Förderband (16) abgehobene Glasbahn (G) aufnehmende Fläche (22) aufweist.

3. Einrichtung nach Anspruch 2, dadurch gekennzeichnet, daß die Aufnahmefläche (22) der Aufnahme (20) im wesentlichen eben ist.

4. Einrichtung nach Anspruch 2, dadurch gekennzeichnet, daß die Aufnahmefläche (22) der Aufnahme (20) im wesentlichen gekrümmt ist.

5. Einrichtung nach Anspruch 3 oder 4, dadurch gekennzeichnet, daß eine Vakuumpumpe (28) voregesehen ist, die auf der dem Förderband (16) zugewandten Seite der Aufnahme (20) ein den Abhebevorgang der Glasbahn (G) vom Förderband unterstützendes Vakuum erzeugt.

6. Einrichtung nach Anspruch 1, dadurch gekennzeichnet, daß die Aufnahme (20) einen die Kanten (42) der vom Förderband (16) abgehobenen Glasbahn (G) aufnehmenden Ring (44) aufweist.

7. Einrichtung nach Anspruch 6, dadurch gekennzeichnet, daß der Ring (44) eben ist.

8. Einrichtung nach Anspruch 6, dadurch gekennzeichnet, daß der Ring (44) gekrümmt ist.

9. Verfahren zur Verarbeitung von erwärmten, horizontal unter einer Glasbiegeeinrichtung hindurchgeführten Glasbahnen, bei dem eine erwärmte Glasbahn zwischen einer oberhalb eines Förderbandes angeordneten Aufnahme und dem Förderband hindurchgeleitet wird, dadurch gekennzeichnet, daß auf die Unterseite des Förderbandes (16) gegen die zugeordnete Seite der Glasbahn (G) Druckgas gefördert wird, so daß die Glasbahn vom Förderband (16) abgehoben und an der zugeordneten Fläche der Aufnahme (20) zur Anlage kommt.

10. Verfahren nach Anspruch 9, dadurch gekennzeichnet, daß auf der der Glasbahn (G) zugewandten Fläche der Aufnahme (20) ein Vakuum erzeugt wird, das im Zusammenwirken mit dem von unten auf die Glasbahn aufgebrachten Gasstrom die Glasbahn abgehoben und an der Aufnahme gehalten wird.

11. Verfahren nach Anspruch 10, dadurch gekennzeichnet, daß unter die Aufnahme (20) eine gekrümmte Form eingebracht wird, die die Glasbahn (G) von der Aufnahme (20) zwecks Durchhänge-Biegung unter der Wirkung der Schwerkraft aufnimmt.

12. Verfahren nach Anspruch 9, gekennzeichnet durch eine die Glasbahn formende Relativbewegung zwischen einer gekrümmten Form und der Aufnahme (20).

**Revendications**

1. Appareil destiné à courber des feuilles de verre chauffées, transportées généralement horizontalement sur un convoyeur passant dans une chambre de chauffage, cet appareil comprenant un porteur de feuille placé à une certaine distance au-dessus du convoyeur de façon que la feuille de verre puisse être transportée par le convoyeur au-dessous du porteur de feuille, et de façon que des ouvertures placées au-dessous du convoyeur laissent passer du gaz sous pression soufflant la feuille de verre vers le haut lorsque celle-ci se trouve au-dessous du porteur, appareil caractérisé en ce que les ouvertures et la soufflerie de gaz sous pression sont disposées de manière à soulever la feuille de verre du convoyeur pour l'amener en contact avec le porteur placé au-dessus du convoyeur.

2. Appareil selon la revendication 1, caractérisé en ce que le porteur de feuille comporte une surface tournée vers le bas, destinée à venir en contact avec la feuille de verre soulevée du convoyeur.

3. Appareil selon la revendication 2, caractérisé en ce que la surface du porteur de feuille est généralement plane.

4. Appareil selon la revendication 2, caractérisé en ce que la surface du porteur de feuille est courbe.

5. Appareil selon l'une quelconque des revendications 3 et 4, caractérisé en ce qu'il comprend en outre un dispositif d'aspiration destiné à faire le vide à la surface du porteur de feuille pour aider le soufflerie de gaz dirigée vers le haut à soulever la feuille de verre du convoyeur.

6. Appareil selon la revendication 1, caractérisé en ce que le porteur de feuille comporte un anneau destiné à venir en contact avec le pourtour de la feuille de verre soulevée du convoyeur.

7. Appareil selon la revendication 6, caractérisé en ce que l'anneau est de forme plane.

8. Appareil selon la revendication 6, caractérisé en ce que l'anneau est de forme courbe.

9. Procédé de traitement de feuilles de verre chauffées transportées horizontalement sur un convoyeur dans un appareil de courbure de feuilles de verre, ce procédé consistant à transporter le feuille de verre chauffée au-dessous d'un porteur de feuille placé à une certaine distance au-dessus du convoyeur, et ce procédé étant caractérisé en ce qu'il consiste à souffler, par le dessous du convoyeur, un courant de gaz dirigé vers le haut contre la feuille de verre, de manière à soulever celle-ci du convoyeur et à la plaquer contre le porteur de feuille.

10. Procédé selon la revendication 9, caractérisé en ce qu'on fait le vide sur la surface tournée vers le bas du porteur de feuille, de manière à aider la soufflerie de gaz dirigée vers le haut à soulever et à maintenir la feuille de verre contre le porteur de feuille.

11. Procédé selon la revendication 10, caractérisé en ce qu'un moule courbe vient se placer sous le porteur de feuille pour recevoir la feuille soulevée par le porteur et tombant du celui-ci, de façon que cette feuille de verre s'incurve sous l'effet de la pesanteur.

12. Procédé selon la revendication 9, caractérisé en ce que le mouvement vertical obtenu entre le moule courbe et le porteur de feuille permet de mettre en forme la feuille de verre.

Fig. 1

Fig. 2

Fig. 3

1

Fig. 4

Fig. 5

Fig. 6

*Fig. 7*

*Fig. 8*

*Fig. 9*

3